# FASCICULE DE BREVET EUROPEEN

(11) **EP 1 630 075 B1**
(45) Date de publication et mention de la délivrance du brevet: **18.03.2009**
(21) Numéro de dépôt: 05291400.9
(22) Date de dépôt: 29.06.2005
(51) Int. Cl.: B62D 25/04, B62D 25/08

(54) **Carrosserie d'un véhicule automobile avec comportement dynamique amélioré**
Fahrzeugkarosserie mit verbessertem dynamischen Verhalten
Vehicle body having improved dynamic behaviour

(30) Priorité: 21.07.2004 FR 0408081
(43) Date de publication de la demande: 01.03.2006
(73) Titulaire: Peugeot Citroën Automobiles SA, 78140 Vélizy-Villacoublay (FR)
(72) Inventeur: Loche, Denis, 91300 Massy (FR)
(74) Mandataire: Allain, Laurent

(56) Documents cités:
- FR-A- 2 825 963
- US-A- 5 246 263
- PATENT ABSTRACTS OF JAPAN vol. 2002, no. 07, 3 juillet 2002 (2002-07-03) & JP 2002 068017 A (KANTO AUTO WORKS LTD), 8 mars 2002 (2002-03-08)

## Description

L'invention concerne une carrosserie d'un véhicule automobile avec un comportement dynamique amélioré. La publication US-A-5 246 263 divulgue une carrosserie d'après le préambule de la revendication 1.

L'invention concerne plus particulièrement la partie arrière de la carrosserie d'un véhicule pourvu d'un volet arrière de type hayon. Cette partie de la carrosserie comprend une partie annulaire formée au moins par une traverse arrière de pavillon, deux gouttières de l'aile arrière respectivement droite et gauche et un panneau arrière. Elle comprend en outre pour chaque côté, donc pour le côté droit et pour le côté gauche de la carrosserie, une zone de custode, une doublure d'aile arrière, une doublure de la partie avant de l'aile arrière et une doublure de la zone de custode. Dans le cadre de la présente invention, le terme « zone de custode » désigne plus particulièrement la partie arrière latérale des éléments de carrosserie en liaison avec un ou plusieurs panneaux correspondants en tôle, non embarquée sur la porte du véhicule.

Selon cette conception d'une carrosserie, la partie annulaire forme un anneau de rigidification dont la forme précise est déterminée par l'ouverture arrière de la carrosserie du véhicule. Toutefois, dans le cadre de la présente invention, le terme "anneau" désigne indifféremment tout ensemble d'éléments formant une partie annulaire de la carrosserie, sans tenir compte de la forme précise de l'ouverture arrière de la carrosserie et donc de cette partie annulaire, l'essentiel étant que ces éléments forment un ensemble de forme fermée.

L'anneau de rigidification remplit deux rôles différents. Le premier rôle est celui de rendre les différentes parties de la carrosserie rigide afin que chacune des parties de la carrosserie puisse résister aux contraintes statiques et dynamiques auxquelles le véhicule est exposé.

Le second rôle de l'anneau de rigidification est celui de permettre aux efforts latéraux de transiter de bas en haut dans la carrosserie du véhicule automobile.

Un rôle accessoire de l'anneau de rigidification est d'être porteur d'un joint d'étanchéité du volet arrière du véhicule automobile.

Afin d'améliorer le comportement dynamique du véhicule automobile, il convient d'augmenter la fréquence du mode propre de torsion dynamique du véhicule. Ceci est obtenu en apportant de la raideur à la structure.

En effet, une structure est caractérisée par une infinité de modes propres qui sont des données intrinsèques à cette structure. Chaque mode propre est caractérisé par une déformée modale et une fréquence propre exprimée en Hertz. L'un d'eux correspond à une torsion de caisse. Ce mode participe directement au comportement dynamique du véhicule, et en particulier au confort vibratoire. Il convient d'augmenter la fréquence de ce mode propre le plus possible afin de garantir cette prestation. Pour augmenter la fréquence du mode de torsion, il est nécessaire d'apporter de la raideur à la caisse. Toutefois, il est souhaitable que cet apport de raideur soit effectué tout en limitant l'apport de masse. Les modes propres sont calculés à partir d'un modèle numérique de la caisse par une méthode d'extraction modale.

Jusqu'à présent, on était obligé, pour rendre la structure plus rigide, de renforcer les doublures par des pièces de rigidification en U ou en Oméga, ce qui augmente le poids de la structure et n'est pas d'une efficacité optimale.

Le but de l'invention est d'améliorer la raideur de la structure d'un véhicule automobile ayant un volet arrière de type hayon, de manière à obtenir un meilleur comportement dynamique du véhicule sans pour autant augmenter notablement la masse de la carrosserie.

Le but de l'invention est atteint avec une carrosserie d'un véhicule automobile ayant une partie annulaire formée au moins par une traverse arrière de pavillon, deux gouttières de l'aile arrière respectivement droite et gauche et un panneau arrière. La carrosserie comprend en outre pour chaque côté, donc pour le côté droit et pour le côté gauche, une zone de custode, une doublure d'aile arrière, une doublure de la partie avant et une doublure de la partie arrière de l'aile arrière et une doublure de la zone de custode.

Conformément à l'invention, la carrosserie comprend pour chaque zone de custode un élément de renforcement reliant la doublure de la partie avant de l'aile arrière correspondante à la traverse arrière de pavillon.

En ajoutant ces éléments de renforcement selon l'invention à la carrosserie, et plus particulièrement par la présence de renforts supérieurs de doublure de custode entre la traverse arrière de pavillon et les doublures de la partie avant et arrière de l'aile arrière, respectivement droite et gauche, on reprend les efforts de torsion dans la zone où ils sont le plus critiques et on rend possible, par les éléments de renforcement, que les efforts remontent de la doublure de la partie avant de l'aile arrière correspondante, jusqu'à la traverse arrière.

Un anneau de rigidification dans une carrosserie selon l'invention permet d'augmenter la fréquence du mode propre de torsion dynamique de quelques Hertz, par exemple de 5 Hertz, avec la forme et les dimensions choisies pour le renfort de la zone de custode, tout en limitant l'ajout de masse.

Selon les dispositions de l'invention, l'anneau initial, c'est-à-dire celui des carrosseries antérieures à l'invention, n'est pas supprimé, mais au contraire maintenu. Il devient alors un anneau secondaire contribuant également, bien que dans une moindre mesure lorsqu'il est dimensionné moins supporteur que l'anneau de l'invention, à la rigidité de la structure. Ainsi, dans un véhicule automobile pourvu d'un volet arrière de type hayon auquel les dispositions de l'invention sont appliquées, la carrosserie est pourvue de deux anneaux de rigidification, le principal étant celui comportant le renfort de la doublure de la zone de custode et le secondaire étant celui où les efforts passent par les gouttières des ailes. La doublure de la zone de custode pouvant être réalisée en une seule pièce ou en deux ou plusieurs parties, il convient de préciser que ce détail de réalisation ne change rien au principe de la présente invention, selon lequel la caractéristique importante est la présence d'un élément de renforcement reliant les doublures de la partie avant et arrière de l'aile arrière correspondante à la traverse arrière de pavillon.

Ceci est d'ailleurs même vrai au vue du fait que la doublure d'aile arrière rejoint la doublure de la partie avant de l'aile arrière à l'endroit précis où se raccorde également l'élément de renforcement sur la doublure de la partie avant de l'aile arrière, de manière à former un noeud de raccordement obtenu par soudage. En effet, la liaison soudée entre la doublure d'aile arrière et la doublure de la partie avant de l'aile arrière a pour fonction principale de créer une zone étanche à l'air et à l'eau. Les dispositions de l'invention n'y changent rien. Au contraire, cette fonction d'étanchéité est indépendante de la fonction de transmission des efforts et doit donc être conservée.

Avantageusement, les éléments de renforcement sont des éléments en nappe. Ces éléments sont appelés « en nappe » du fait qu'ils sont tendus suivant une seule direction, par opposition aux pièces en U ou en Oméga.

Outre l'avantage du moindre poids, les éléments de renforcement en nappe ont l'avantage de ne pouvoir être soudés sur la doublure de la custode correspondante que par un de leurs bords latéraux, l'autre bord étant fixé à la carrosserie par un mastic de calage.

Selon la conception du véhicule automobile auquel la présente invention est appliquée, chacun des éléments de renforcement peut être pourvu d'encoches permettant le passage de pieds d'agrafes pour un faisceau de câbles.

D'autres caractéristiques et avantages de la présente invention ressortiront de la description ci-après d'un mode de réalisation de l'invention, la description étant faite en référence aux dessins annexés.

Dans ces dessins,
- la figure 1 montre la partie arrière droite d'une structure d'un véhicule automobile sans l'élément de renforcement selon l'invention,
- la figure 2 montre la partie arrière droite d'une structure d'un véhicule automobile avec un élément de renforcement selon l'invention, et
- la figure 3 montre la fixation d'un élément de renforcement selon l'invention dans la carrosserie d'un véhicule automobile.

Pour faciliter la lecture de la description d'un mode de réalisation de l'invention, des numéros de référence sont donnés non seulement aux pièces de la partie arrière droite de la carrosserie, représentées dans les dessins, mais également à des pièces de la partie gauche correspondante, non représentées, et notamment de l'anneau de rigidification, si elles correspondent à une pièce de la partie droite de l'anneau de rigidification. Ces numéros de référence sont remarquables par leur lettre supplémentaire respective « D » pour la pièce du côté droit et « G » pour la pièce du côté gauche, vue dans le sens de la marche du véhicule automobile.

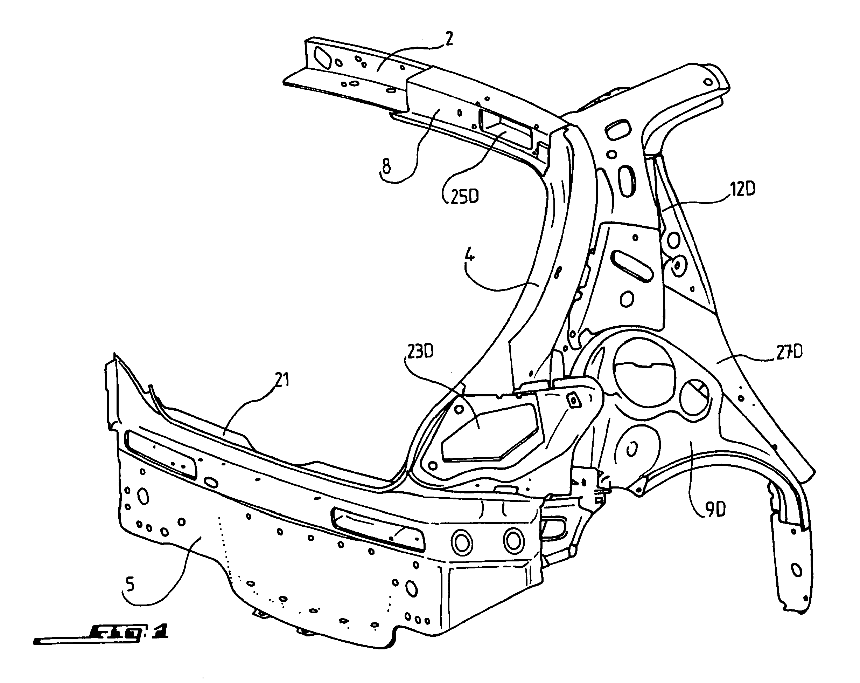

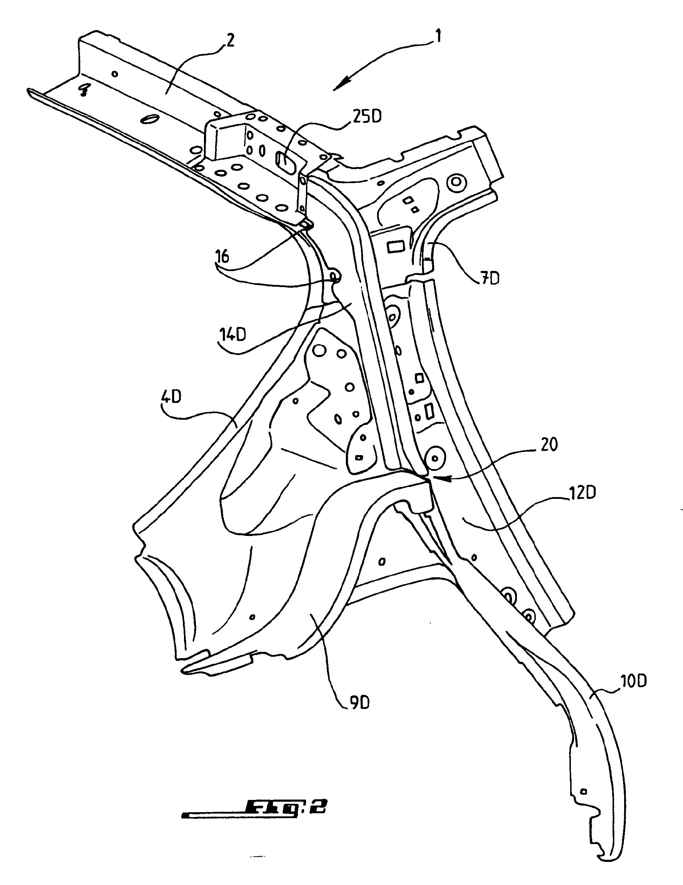

Dans un véhicule automobile pourvu d'un volet arrière de type hayon, du fait de l'absence d'un élément de rigidification médiane telle qu'une traverse médiane que l'on retrouve dans des carrosseries à trois volumes, des mesures particulières sont nécessaires pour assurer la rigidité de la carrosserie. C'est ainsi que l'on pourvoit la carrosserie d'un véhicule automobile ayant un volet arrière de type hayon, d'une partie annulaire, également appelé « anneau de rigidification », dont les figures 1 et 2 ne montrent que la partie droite, vue dans le sens de la marche du véhicule.

L'anneau de rigidification est traditionnellement formé au moins par une traverse arrière de pavillon 2, une gouttière 4G de l'aile arrière gauche, une gouttière 4D de l'aile arrière droite et un panneau arrière 5. La carrosserie comprend en outre une zone de custode gauche 7G, une zone de custode droite 7D, une doublure d'aile arrière gauche 9G et une doublure d'aile arrière droite 9D, éventuellement une doublure 8 de la traverse arrière de pavillon 2, une doublure 12G de la zone de custode gauche 7G et une doublure 12D de la zone de custode droite 7D. Cette partie arrière de la carrosserie comprend également une doublure 21 du panneau arrière 5, un logement 23G et un logement 23D pour les feux arrière gauche et droit du véhicule, ainsi que des supports 25G, 25D pour des charnières gauche et droite du volet arrière du véhicule et des doublures 27G, 27D pour la partie inférieure respective des zones de custode gauche 7G et droite 7D.

Cette partie arrière d'une carrosserie avant l'invention comprend encore d'autres éléments raidisseur comme le tableau unique joint à la présente description en témoigne.

Chacun des éléments de cette partie arrière de la carrosserie présente une certaine masse exprimée dans le tableau joint en kg.

L'anneau de rigidification 1 d'une carrosserie selon l'invention, dont la figure 2 ne représente que la partie droite, comprend une traverse arrière de pavillon 2, une gouttière 4G de l'aile arrière gauche et une gouttière 4D de l'aile arrière droite, un panneau arrière 5, une doublure d'aile arrière gauche 9G et une doublure d'aile arrière droite 9D, une doublure 12G de la zone de custode gauche 7G et une doublure 12D de la zone de custode droite 7D, ainsi qu'une doublure 10G de la partie avant de l'aile arrière gauche et une doublure 10D de la partie avant de l'aile arrière droite.

L'anneau de rigidification 1 comprend de plus, selon l'invention, respectivement pour la zone de custode droite 7D et, de manière analogue, pour la zone de custode gauche 7G, un élément de renforcement 14D et un élément de renforcement 14G reliant respectivement la doublure 10G et la doublure 10D de la partie avant de l'aile arrière correspondante à la traverse arrière de pavillon 2.

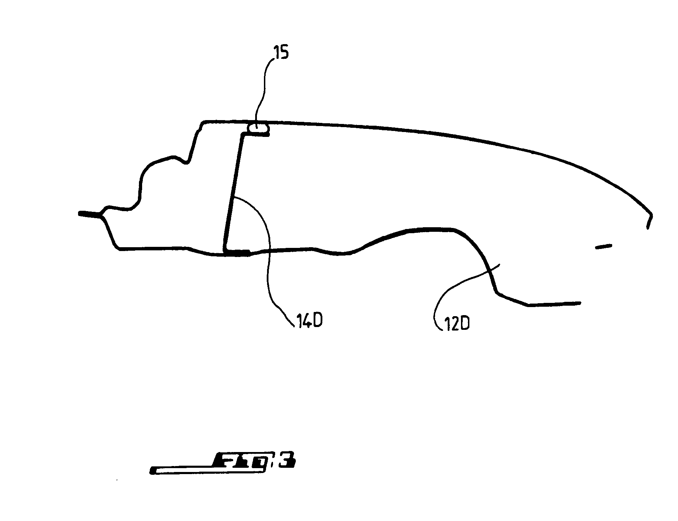

Les éléments de renforcement gauche 14G et droit 14D sont fixés sur la doublure gauche 12G de la zone de custode gauche 7G et, de manière analogue, sur la doublure droite 12D de la zone de custode droite 7D, par des points de soudure électrique. Les éléments de renforcement sont par ailleurs liés à la carrosserie par un mastique de calage 15, comme cela est représenté sur la figure 3.

L'élément de renforcement droit 14D et l'élément correspondant gauche 14G sont avantageusement pourvus chacun d'au moins une encoche 16 permettant le passage de pieds d'agrafes pour fixer un faisceau de câbles.

Le fait de relier la doublure 10G, 10D de chacune des parties avant des ailes arrière à la traverse arrière de pavillon 2 à l'aide d'un élément de renforcement 14G ou 14D, qui sont soudés sur la doublure 12G ou 12D de la zone de custode correspondante et qui sont liés au côté correspondant de la carrosserie par le mastique de calage 15, permet de créer du côté droit et du côté gauche de la carrosserie, un passage d'effort de bas en haut.

Grâce à cette disposition de l'invention, on reprend les efforts de torsion dans la zone où ils sont le plus critiques et on rend possible, par les éléments de renforcement 14G et 14D, que les efforts remontent de la doublure 10G, ou 10D, de la partie avant de l'aile arrière correspondante, jusqu'à la traverse arrière de pavillon 2. Grâce à cette disposition de l'invention, la fréquence du mode propre de torsion dynamique de la carrosserie a pu être augmentée de 36 Hertz à 41 Hertz.

Par ailleurs, la doublure d'aile arrière 9G, 9D rejoint la doublure 10G, 10D de la partie avant de l'aile arrière correspondante à l'endroit précis où se raccorde également l'élément de renforcement 14G, 14D sur la doublure 10G, 10D de la partie avant de l'aile arrière, de manière à former un noeud de raccordement 20 obtenu par soudage.

Le tableau joint à la présente description donne, pour une carrosserie appelée C1 ayant un anneau de rigidification sans application de l'invention et pour une carrosserie appelée C2 ayant un anneau de rigidification avec application de l'invention, dans la première partie la comparaison des masses pour les pièces transversales et dans la seconde partie la comparaison des masses pour les pièces latérales. Le tableau se termine avec une ligne indiquant la masse totale des pièces énumérées dans les deux parties du tableau, donc la masse totale au véhicule.

Dans chacune des deux parties, la colonne gauche indique la désignation des pièces, la colonne centrale indique la masse de chacune des pièces pour un anneau de rigidification avant l'invention et la colonne de droite indique la masse de chacune des pièces pour un anneau de rigidification avec application de l'invention.

| **Comparaison des masses (en kg) des anneaux arrière dans des carrosseries C1 et C2** | | |
|---|---|---|
| Pièces transversales : (AR = arrière) | | |
| **Désignations** | **C1** | **C2** |
| Traverse AR Pavillon | 1,16 | 0,589 |
| Doublure Traverse Pavillon | 1,16 | 0 |
| Panneau AR | 3,5 | 0,684 |
| Doublure Panneau AR | 2 | 2,136 |
| **TOTAL** | **7,82** | **3,409** |

| Pièces latérales : (AR = arrière) | | |
|---|---|---|
| **Désignations** | **C1** | **C2** |
| Gouttière Aile AR | 0,41 | 0,576 |
| Doublure Gouttière Aile AR | 1,55 | 0 |
| Gousset Gouttière Aile AR | 0 | 0,97 |
| Doublure Custode SUP | 0,74 | 1,474 |
| Doublure Custode INF | 0,86 | 0 |
| Logement Feu AR | 0,72 | 0,663 |
| Logement INF Feu AR | 0 | 1,282 |
| Renfort SUP Doublure Custo | 0 | 0, 87 |
| Ame ArC Pavillon | 1,23 | Ne participe pas à la torsion |
| Raidis Vertical Panneau Coté | 0,82 | 0 |
| Raidis Vertical INF Pan Coté | 0,2 | 0 |
| Raidis Horizon INF Pan Coté | 0,13 8 | 0 |
| Fermeture Doublure Aile AR | 0,66 | 0 |
| Doublure Aile AR Partie AV | 0 | 1,25 |
| Doublure Aile AR | 1,2 | 0,396 |
| Support Charnière Volet | 0,293 | 0,46 |
| Fermeture AV Doub Aile AR | 0,2 | 0 |
| Extension Doub Aile AR | 0,2 | 0 |
| **TOTAL par coté** | **9,22** | **7,94** |
| **TOTAL au véhicule** | **18,44** | **15,88** |
| | | |
| **TOTAL au véhicule** | **26,26** | **19,29** |

## Revendications

1. Carrosserie d'un véhicule automobile pourvue d'un volet arrière de type hayon ayant une partie annulaire (1) formée au moins par une traverse arrière de pavillon (2), deux gouttières d'aile arrière respectivement droite (4D) et gauche (4G) et un panneau arrière (5), la carrosserie comprenant en outre respectivement pour le côté droit et pour le côté gauche, une zone de custode (7G, 7D), une doublure d'aile arrière (9G, 9D), une doublure (10G, 10D) de la partie avant de l'aile arrière et une doublure (12G, 12D) de la zone de custode (7G, 7D), ainsi que pour chaque zone de custode (7G, 7D) un élément de renforcement (14G, 14D) reliant la doublure (10G, 10D) de la partie avant de l'aile arrière correspondante à la traverse arrière de pavillon (2), **caractérisée en ce que** chacun des éléments de renforcement (14G, 14D) est raccordé à la fois à la doublure (10G, 10D) de la partie avant de l'aile arrière correspondante et à la doublure d'aile arrière (9G, 9D) correspondante de manière à former un noeud de raccordement (20), la doublure d'aile arrière (9G, 9D) et la doublure (10G, 10D) de la partie avant de l'aile arrière étant liées l'une à l'autre de manière à créer une zone étanche à l'air et à l'eau.

2. Carrosserie selon la revendication 1, **caractérisée en ce que** chacun des éléments de renforcement (14G, 14D) est un élément en nappe.

3. Carrosserie selon la revendication 1 ou 2, **caractérisée en ce que** chacun des éléments de renforcement (14G, 14D) est soudé sur la doublure (12G, 12D) de la zone de custode correspondante (7G, 7D).

4. Carrosserie selon l'une quelconque des revendications 1 à 3, **caractérisée en ce que** chacun des éléments de renforcement (14G, 14D) est lié à la carrosserie également par un mastic de calage (15).

5. Carrosserie selon la revendication 3, **caractérisée en ce que** chacun des éléments de renforcement (14G, 14D) est pourvu d'au moins une encoche (16) permettant le passage de pieds d'agrafe pour le montage d'un faisceau de câbles.

6. Carrosserie selon l'une quelconque des revendications 1 à 5, **caractérisée en ce que** la doublure (12G, 12D) de la zone de custode (7G, 7D)est formée en au moins une pièce.

## Claims

1. Bodywork of a motor vehicle provided with a rear flap of the tailgate type having an annular portion (1) formed at least by one rear roof cross member (2), two rear wing gutters respectively right (4D) and left (4G) and a rear panel (5), the bodywork also comprising respectively for the right side and for the left side a quarter-panel zone (7G, 7D), a rear wing lining (9G, 9D), a lining (10G, 10D) of the front portion of the rear wing and a lining (12G, 12D) of the quarter-panel zone (7G, 7D), and, for each quarter-panel zone (7G, 7D), a reinforcement element (14G, 14D) connecting the lining (10G, 10D) of the front portion of the corresponding rear wing to the rear roof cross member (2), **characterized in that** each of the reinforcement elements (14G, 14D) is connected both to the lining (10G, 10D) of the front portion of the corresponding rear wing and to the corresponding rear wing lining (9G, 9D) so as to form a connection node (20), the rear wing lining (9G, 9D) and the lining (10G, 10D) of the front portion of the rear wing being connected to one another so as to create an airtight and watertight zone.

2. Bodywork according to Claim 1, **characterized in that** each of the reinforcement elements (14G, 14D) is a layered element.

3. Bodywork according to Claim 1 or 2, **characterized in that** each of the reinforcement elements (14G, 14D) is welded to the lining (12G, 12D) of the corresponding quarter-panel zone (7G, 7D).

4. Bodywork according to any one of Claims 1 to 3, **characterized in that** each of the reinforcement elements (14G, 14D) is connected to the bodywork also by an adjusting mastic (15).

5. Bodywork according to Claim 3, **characterized in that** each of the reinforcement elements (14G, 14D) is provided with at least one notch (16) allowing the passage of clip feet for the installation of a wiring loom.

6. Bodywork according to any one of Claims 1 to 5, **characterized in that** the lining (12G, 12D) of the quarter-panel zone (7G, 7D) is formed in at least one piece.

## Patentansprüche

1. Karosserie eines Kraftfahrzeugs, die mit einer Hinterklappe der Art Heckklappe versehen ist, die einen ringförmigen Teil (1) aufweist, der mindestens mit einem Karosserieoberteil-Hinterachsträger (2) gebildet ist, zwei rechten (4D) bzw. linken (4G) Kotflügel-Regenrinnen und einer Hecklade (5), wobei die Karosserie ferner für die rechte Seite bzw. die linke Seite eine hintere Seitenwandzone (7G, 7D), eine hintere Kotflügelwand (9G, 9D), eine Kotflügelwand (10G, 10D) des vorderen Teils des hinteren Kotflügels und eine Kotflügelwand (12G, 12D) der hinteren Seitenwandzone (7G, 7D) umfasst, sowie für jede hintere Seitenwandzone (7G, 7D) ein Verstärkungselement (14G, 14D), welches die Kotflügelwand (10G, 10D) des vorderen Teils des entsprechenden hinteren Kotflügels mit dem Karosserieoberteil-Hinterachsträger (2) verbindet, **dadurch gekennzeichnet, dass** jedes der Verstärkungselemente (14G, 14D) zugleich an die Kotflügelwand (10G, 10D) des vorderen Teils des entsprechenden hinteren Kotflügels und an die Kotflügelwand des entsprechenden hinteren Kotflügels (9G, 9D) angeschlossen ist, um einen Verbindungsknoten (20) zu bilden, wobei die Kotflügelwand des hinteren Kotflügels (9G, 9D) und die Kotflügelwand (10G, 10D) des vorderen Teils des hinteren Kotflügels miteinander verbunden sind, um eine luft- und wasserdichte Zone zu schaffen.

2. Karosserie nach Anspruch 1, **dadurch gekennzeichnet, dass** jedes der Verstärkungselemente (14G, 14D) ein Lagen-Element ist.

3. Karosserie nach Anspruch 1 oder 2, **dadurch gekennzeichnet, dass** jedes der Verstärkungselemente (14G, 14D) auf die Kotflügelwand (12G, 12D) der entsprechenden hinteren Seitenwandzone (7G, 7D) geschweißt ist.

4. Karosserie nach einem der Ansprüche 1 bis 3, **dadurch gekennzeichnet, dass** jedes der Verstärkungselemente (14G, 14D) auch mittels eines Füllkitts (15) mit der Karosserie verbunden ist.

5. Karosserie nach Anspruch 3, **dadurch gekennzeichnet, dass** jedes der Verstärkungselemente (14G, 14D) mit mindestens jeweils einer Auskerbung (16) versehen ist, die jeweils den Durchgang von Klammerfüßen zur Befestigung eines Kabelbündels ermöglicht.

6. Karosserie nach einem der Ansprüche 1 bis 5, **dadurch gekennzeichnet, dass** die Kotflügelwand (12G, 12D) der hinteren Seitenwandzone (7G, 7D) aus mindestens einem Stück gebildet ist.
